# EUROPEAN PATENT SPECIFICATION

(11) **EP 0 498 785 B1**
(45) Date of publication and mention of the grant of the patent: **17.12.1997**
(21) Application number: 92870022.8
(22) Date of filing: 06.02.1992
(51) Int. Cl.: A01N 57/20, A01N 25/30

(54) **Glyphosate compositions and their use**
Glyphosat-Zusammensetzungen und deren Verwendung
Composition de glyphosate et leurs utilisations

(30) Priority: 08.02.1991 EP 91870021
(43) Date of publication of application: 12.08.1992
(73) Proprietor: MONSANTO EUROPE S.A./N.V., B-1150 Brussels (BE)
(72) Inventor: Mitchell, Robert William, B-1900 Overijse (BE); Bonnet, Marc René Edouard, B-4000 Liège (BE); Khan, Shuaib Ahmad, B-1160 Brussels (BE); Toussaint, Marc Emile, B-5872 Corroy-Le-Grand (BE); Arnold, Kristin Anne, Kirkwood, MO 63122 (US)
(74) Representative: Bosch, Henry

(56) References cited:
- EP-A- 0 268 574
- EP-A- 0 343 142
- GB-A- 816 915
- US-A- 2 696 453
- US-A- 3 095 353
- WEED SCIENCE, vol. 25, no. 3, May 1977; J.B.WYRILL III et al., pp. 275-287

## Description

The present invention relates to improved glyphosate compositions comprising a glyphosate herbicide and surfactants.

Numerous studies have been made on the effect of surfactants on the herbicidal action of glyphosate. Wyrill and Burnside, Weed Science, Vol. 25 (1977), 275-287, studied the effects of many different surfactants including examples from different classes of surfactant. Some classes of surfactant were more effective than others in enhancing the herbicidal effect of glyphosate (used as a solution of the isopropylamine salt). Wyrill and Burnside concluded that an effective surfactant is an important component of any glyphosate spray formulation.

Present commercially sold glyphosate formulations containing a surfactant are acceptably safe herbicidal formulations from the point of view of lack of toxicity and environmental acceptability.

When we examined mixing environmentally desirable surfactants with a glyphosate herbicide in order to achieve yet lower toxicity and/or irritancy levels we had difficulty in reaching substantially the same level of enhancement of glyphosate activity in certain situations to those obtained with an ethoxylated fatty amine surfactant used in commercial glyphosate formulations.

Sorbitan fatty acid esters and more particularly ethoxylated sorbitan fatty acid esters like TWEEN 20 (trade name of a sorbitan monolaurate) are known as wetting agents and have already been disclosed as possible surfactants in glyphosate formulations. For example, P.A. O'Sullivan and J.T. O'Donovan, "Influence of Various Herbicides and TWEEN 20 on the Effectiveness of Glyphosate" Can. J. Plant. Sci 60; 939-945, describe tank mixes of glyphosate with TWEEN 20. In Weed Research, 1985, Volume 25, 81-86, J.T. O'Donovan et al disclose that TWEEN 20 enhances the retention of a glyphosate solution on barley leaves.

In our initial work, glyphosate compositions containing sorbitan esters as surfactant appeared, however, to show some stability and long term storage problems.

Wyrill and Burnside, Weed Science, supra, mention on page 283 that "effectiveness of surfactant combinations is quite variable and difficult to predict - therefore, the indiscriminate addition of surfactants or wetting agents to glyphosate sprays which already contain a surfactant should be avoided".

EP-0 343 142 discloses liquid storage-stable dispersions comprising, in an aqueous medium,
(a) a water-soluble salt of glyphosate;
(b) simazine, and
(c) diuron as particulate solids;
(d) a surfactant which is a nonionic block copolymer of propylene oxide and ethylene oxide, the central block of the molecule being poly-(propylene oxide) and the end groups being poly-(ethylene oxides), in an amount of from 2 to 15% of the combined weight of the simazine and diuron;
(e) a surfactant which is an ethoxylated C₈₋₁₈ alkanoyl ester of sorbitan, such as Tween 20, in an amount of at least 40% and up to 70% of the combined weight of the simazine and diuron;
(f) a surfactant which is an ethoxylated fatty amine, such as Genamin CO20, in an amount of from 3 to 15% of the combined weights of surfactants (e) and (f); and
(g) a water-soluble/water-dispersible thickener, in an amount such that the composition has a viscosity at 25°C within the range 900 to 3500 cps; wherein the weight ratios of components (a) (expressed as glyphosate acid equivalent), (b) and (c) are from 1.0:0.4:0.5 to 1.0:3.0:3.5.

These compositions, however, contain high levels of sorbitan ester surfactant.

Similarly EP-0 268 574 discloses liquid storage-stable dispersions comprising, in an aqueous medium,
(a) a water-soluble salt of glyphosate;
(b) simazine, and
(c) diuron as particulate solids;
(d) a surfactant which is a phosphoric ester of an ethoxylated aralkylated phenol in an amount of from 5 to 15% of the combined weight of the simazine and diuron;
(e) a surfactant in an amount of at least 40% and up to 80% of the combined weight of the simazine and diuron, and which is (i) an ethoxylated C₈₋₁₈ alkanoyl ester of sorbitan and/or (ii) an ethoxylated C₁₄₋₂₀ alcohol; and
(f) a water-soluble/water-dispersible thickener in an amount such that the composition has a viscosity at 25°C within the range 200 to 3500 cps;
wherein the weight ratios of components (a) (expressed as glyphosate acid equivalent), (b) and (c) are from 1.0:0.8:1.3 to 1.0:1.25:3.5.

Again, these compositions contain high levels of sorbitan ester surfactant.

GB-876 915 discloses emulsifying agents for agricultural compositions, comprising 80 to 50% w/w of a sorbitan ester surfactant and 20 to 50% of an amine salt of an alkaryl sulfonic acid surfactant. Examples disclose high ratios of 1/1 (sorbitan ester surfactant - other surfactant). Herbicidal glyphosate compositions are not mentioned.

US-3 095 353 also discloses emulsifying agents for pesticidal agents. Such emulsifying agents comprise a sorbitan ester surfactant and a different surfactant, in a ratio as low as 50:50. Again, glyphosate compositions are not mentioned.

US-2 696 453 discloses adjuvants for agricultural compositions comprising a sorbitan ester surfactant and a chemically different surfactant. Example 1 discloses a combination of 7 parts of mono-lauryl benzene mono-sulfonic acid, Ca salt and 3 parts of Tween 20.

The aim of the present invention is to enhance the herbicidal activity obtained with certain surfactants selected for their low toxicity and low irritancy properties in situations where these are less effective than commercial glyphosate formulations.

Another aim of the present invention consists in providing new glyphosate formulations showing a herbicidal activity of about the same level as that of commercially available glyphosate formulations containing an ethoxylated tallow amine surfactant.

A further object of the invention is to provide glyphosate compositions containing a surface active component which is effective in enhancing the herbicidal activity of glyphosate and which show low toxicity and/or irritancy levels.

The present invention satisfies this aim and these objects as it is a glyphosate composition containing as a surface active component a combination of a sorbitan fatty acid ester and a surfactant chemically different from the sorbitan fatty acid ester, selected from
- amines, such as ethoxylated alkyl amines, particularly tallow amines, cocoamines, surfactants sold under the tradename Ethomeen, amine oxides, such as surfactants sold under the trade name Empigen OB;
- quaternary ammonium salts, such as ethoxylated and/or propoxylated quaternary ammonium salts, more particularly surfactants sold under the trade names Ethoquad, Emcol CC, Dodigen; quaternary ammonium salts as disclosed in EP-A-0 441 764;
- alkylpolyglycoside or alkylglycoside, glucose or sucrose esters, like surfactants from the Crodesta F series wherein, for the surface active component the ratio by weight of sorbitan ester to surfactant is comprised between 10/90 and 30/70, for a liquid composition, and between 10/90 and 90/10, preferably 10/90 and 50/50, for a solid composition.

We found that a sorbitan ester wetting agent added to another (chemically different) surfactant as cited above provides the desired glyphosate activity enhancement.

The term "sorbitan ester" includes sorbitan fatty acid esters, such as sorbitan monolaurate, sorbitan monooleate, sorbitan trioleate, sorbitan sesquioleate, sorbitan monopalmitate, sorbitan monostearate, sorbitan tristearate, possibly ethoxylated or propoxylated.

Most preferred are quaternary ammonium salts as recited above.

As used herein, "glyphosate composition" means N-phosphonomethylglycine as well as any composition or formulation containing a glyphosate herbicide. "Glyphosate herbicide" means any form or derivative of glyphosate which in aqueous solution provides glyphosate anions along with suitable cations or glyphosate acid. Glyphosate herbicide includes the isopropylamine salt of glyphosate and other agriculturally acceptable salts of glyphosate such as those disclosed in US Patent 3,799,758.

Examples of such suitable cations are alkali metal cations, for instance sodium and potassium, and ammonium and substituted ammonium cations. The latter include cations derived from primary or secondary amines such as isopropylamine or dimethylamine, and from diamines such as ethylenediamine.

Further, examples of agriculturally acceptable salts of glyphosate are trimethyl-sulfonium salt or aminoguanidine salts as disclosed in EP-A-0 088 180. Because glyphosate has more than one replaceable hydrogen atom, mono- and di- salts are possible, as well as mixtures of such salts.

As seen in the examples, the additional presence of a sorbitan ester wetting agent in the surface active component allows a comparable reduction in the surfactant loading of the surfactant chemically different from the sorbitan ester needed so that overall efficacy of the glyphosate composition remains substantially the same as the prior art glyphosate. This invention thus provides a glyphosate herbicidal composition having substantially the activity of a glyphosate herbicidal composition containing the same herbicide and an ethoxylated tallow amine surfactant.

Good results with liquid formulations have been obtained with a surface active component wherein the ratio by weight is 20/80.

In some cases, lower sorbitan ester content may not show commercially attractive results and higher sorbitan ester content in the formulation tend to give the composition some of the disadvantages of prior art glyphosate compositions containing sorbitan esters alone.

In the compositions of the invention, the weight ratio of glyphosate (expressed as glyphosate acid equivalent) to the total surface active component can vary over a considerable range, for example from 1:5 to 5:1. The optimum ratio will vary according to the manner in which the herbicidal composition is applied, the weed species to be treated, and the particular surfactant used in combination with the sorbitan ester as well as the ratio of sorbitan ester to the other chemically different surfactant selected, but is normally within the range 1:2 to 4:1, as for example 1:1 or 2:1.

A composition of the invention can be a liquid concentrate intended to be diluted with water to form a spray solution for the herbicidal application. A liquid concentrate will normally contain at least 50 grams glyphosate acid equivalent per litre, and preferabiy at least 100 g/l, but in certain cases, more diluted ready to use formulations may contain glyphosate concentrations of about 5 g/l.

Compositions of the invention may include a significant amount of an agriculturally-acceptable inorganic ammonium salt such as ammonium nitrate, ammonium thiocyanate, ammonium phosphate, ammonium chloride, preferably ammonium sulphate, in addition to the glyphosate herbicide and surface active component. Liquid concentrates without such an inorganic ammonium salt can contain up to 450 g/l or more, for example 300-450 g/l, glyphosate acid equivalent when the glyphosate is present as a salt having a high solubility, for example the isopropylamine salt. In liquid concentrates containing an inorganic ammonium salt (for example ammonium sulphate in an amount of from 100 to 500 g/l), the maximum amount of glyphosate which can be accommodated is less, and may be, for example, about 150 g/l glyphosate acid equivalent.

In another form, a composition of the invention is a solid, for example a free-flowing particulate, granular solid or compressed into tablets or briquettes of any desired size and shape. Such compositions will usually contain not more than 5% and preferably not more than 1% by weight of water. In a solid composition, the glyphosate is preferably present as an alkali metal salt such as a sodium or potassium salt, an alkali-earth metal salt or an ammonium salt, or as a mixture of those salts.

Solid compositions may be formulated to include a water-soluble inert carrier, and for this purpose ammonium sulphate is particularly suitable. The weight ratio of glyphosate (expressed as glyphosate acid equivalent) to surface active component in such compositions will be within the general range mentioned above. The amount of water-soluble inert carrier is not critical, and in the case of ammonium sulphate, the amount may, for example, range from 20% to 80% of the total weight of the composition. Solid compositions can be made, for example by spray drying an aqueous solution of the components, by dry-blending the ingredients in conventional granulating apparatus, or by extrusion blending whereby a granular product is obtained in an essentially single operation. In a preferred method, an alkali metal salt of glyphosate is prepared in situ by the method of European patent application WO 87/04712. It has been found that by radial extrusion, a product with better dissolution characteristics in water can be obtained, compared to frontal extrusion. Good results have been obtained with a surface active component wherein the ratio by weight is comprised between 10/90 and 90/10 of sorbitan ester wetting agent to the other surfactant, more preferably between 10/90 and 50/50.

Compositions of the invention also include spray solutions. In these solutions, the concentration of glyphosate is selected according to the volume per unit area of spray solution to be used and the desired rate of application of glyphosate per unit area. For example, conventional spraying is done at 100-600 litres of spray solution per hectare, and the rate of application of glyphosate is typically 0.125 to 3 kg of glyphosate acid equivalent per hectare. In controlled drop spraying, the rate of application of glyphosate per hectare will normally be within the same range, but the volume of spray solution per hectare will be considerably less, perhaps 15-50 litres per hectare. Spray solutions for controlled drop spraying are therefore more concentrated than those used in conventional spraying. In spray solutions containing inorganic ammonium salts in addition to the glyphosate and surface active component, the amount of inorganic ammonium salt which can be included may be, for example, up to 10 times the weight of glyphosate acid equivalent.

Spray solution compositions can be prepared by diluting liquid concentrates or dissolving solid compositions of this invention as described above, or by tank mixing the separate components of our compositions.

Still another embodiment pertaining to the present invention includes an adjuvant for agricultural compositions, comprising a sorbitan fatty acid ester and a chemically different surfactant selected from
- amines, such as ethoxylated alkyl amines, particularly tallow amines, cocoamines, surfactants sold under the tradename Ethomeen, amine oxides, such as surfactants sold under the trade name Empigen OB;
- quaternary ammonium salts, such as ethoxylated and/or propoxylated quaternary ammonium salts, more particularly surfactants sold under the trade names Ethoquad, Emcol CC, Dodigen; quaternary ammonium salts as disclosed in EP-A-0 441 764;
- alkylpolyglycoside or alkylglycoside, glucose or sucrose esters, like surfactants from the Crodesta F series, in the weight ratio 10/90 to 30/70.

Compositions of the invention including the adjuvant can optionally contain other components. These additional components may include anti-freeze agents such as ethylene glycol, polyethylene glycols and glycerol. Other examples are dyes, thickening agents, anti-foam agents, for instance silicone-based antifoam agents, and certain surfactants, for instance non-ionic surfactants such as polyoxyethylene ethers or esters, and sugar ethers. The concentrates and solutions of the invention may also be mixed with other herbicides. Preferably though not required such other herbicides, insecticides or fungicides have low irritancy and toxicity.

In addition to the previously cited advantages, the compositions of the invention unexpectedly show increased rainfastness characteristics, under certain conditions and on certain weed species when compared to a composition that does not contain any sorbitan fatty acid ester in the surfactant component but with the same global surfactant content. In some instances, the composition of the invention shows even better rainfastness characteristics than a current commercial herbicidal glyphosate formulation.

### EXAMPLE 1

A commercial glyphosate formulation containing the isopropylamine salt of glyphosate and a tallow amine surfactant (Composition 1 below) and a glyphosate formulation containing the same glyphosate salt and propoxylated quaternary ammonium surfactant as disclosed in EP-A-0 441 764, table 1, number 6, in the same ratio by weight of 2/1 (Composition 2 below), are compared with tank-mix formulations according to the invention containing the same glyphosate salt and different surface active components. Said surface active components contain the above specified quaternary ammonium surfactant and a monolaurate sorbitan ester (TWEEN 20) in different ratios.

The tested compositions are as follows:

| Composition | glyphosate ingredient | surfactant | ratio by weight |
|---|---|---|---|
| 1 | isopropylamine salt of glyphosate | tallow amine | 2:1 |
| 2 | " | quat. amnonium** | 2:1 |
| 3 | " | quat. am./sorbitan*** | 2:0.9:0.1 |
| 4 | " | quat. am./sorbitan*** | 2:0.8:0.2 |
| 5 | " | quat. am./sorbitan*** | 2:0.7:0.3 |

| | | | |
|---|---|---|---|
| ** quaternary ammonium | | | |
| *** sorbitan fatty acid ester | | | |

The rates of application of this test were equivalent to 300, 600 and 900 g.a.e./ha.

Plants were grown from seed in 10 cm pots containing a natural sandy loam soil. The pots were placed in a growth-room until the spraying with a precise relative humidity as well as temperature control. After spraying plants were transferred to a greenhouse where light and temperature were also well controlled. Plants remained in this greenhouse for the remainder of the experiment. Both in growth-room and in the greenhouse, the water was supplied from below the pots by an automatic irrigation system.

Plants reached the appropriate growth stage for spraying around 3-4 weeks after sowing. Before spraying, pots were selected for uniformity as far as possible and atypical pots were discarded.

Glyphosate formulations were applied post-emergence with a Mardrive precision laboratory sprayer, calibrated to 200 l/ha spray solution in a single pass. All formulations were diluted with water. All replicate pots (3-5 pots per treatment) were sprayed with one pass of the sprayer.

Pots were distributed randomly in the growth room after treatment. Untreated control pots were placed at random among treated pots.

Assessment of per cent phytotoxicity was made by comparison with untreated control pots on an arbitrary scale from 0 to 100%, where 0 means no visible effect and 100 means death of all plants.

The treated plants are selected from broadleaved (BLW) and narrowleaved (NLW) species. Broadleaved species treated comprised Brassica (oilseed rape) and Geranium molle. Narrowleaved species treated comprised Lolium rigidum and Agropyron repens (couch).

The results are presented as average values of three replicates at three rates (300, 600 and 900 g a.e./ha) and three assessments on 10, 17 and 38 days after treatment.

**TABLE 1**

| Composition | BLW | NLW |
|---|---|---|
| 1 | 73 | 68 |
| 2 | 58 | 64 |
| 3 | 68 | 71 |
| 4 | 68 | 75 |
| 5 | 71 | 72 |

In the conditions of the test, composition 2 was less effective than a commercial glyphosate formulation on broadleaved weeds. It appears from the above table that the compositions of the invention show a higher activity than composition 2 and that the activity obtained is very close to that of the commercial formulation (1).

On narrowleaved weeds, some compositions of the invention show even better activity than the commercial formulation.

### EXAMPLE 2

A further test was carried out according to Example 1.

Test conditions were: 12/18°C; 65%/75% relative humidity.

The results are presented as average value of three replicates, at three rates (360, 720, 1440 g a.e./ha) and three assessments on 14, 25 and 39 days after treatment.

**TABLE 2**

| Composition | BLW (BRSNW & GERMO) | NLW (LOLRI & AGRRE) |
|---|---|---|
| 1 | 68 | 66 |
| 2 | 66 | 68 |
| 4 | 70 | 75 |

According to the above, composition 4 of the invention reaches the activity level of the commercial formulation on broadleaved weeds and is even more effective than the commercial formulations on narrowleaved weeds.

### EXAMPLE 3

A further test was carried out according to Example 1.

The results are presented as average value of three replicates, at three rates (360, 720, 1080 g a.e./ha) and two assessments on 20 and 31 days after treatment.

**TABLE 3**

| Composition | BRSNW | GERMO | LOLRI | AGRRE |
|---|---|---|---|---|
| 1 | 56 | 44 | 85 | 66 |
| 2 | 42 | 41 | 72 | 63 |
| 4 | 52 | 50 | 80 | 75 |

From the above, it appears that composition 4 according to the present invention is more active than composition 2 (without sorbitan ester, but with the same total surfactant content). On Brassica, composition 4 reaches the level of activity of the commercial formulation (1) and on Geranium and Agropyron, it is even better than the commercial formulation (1). On Lolium, composition 4 shows a better activity compared to composition 2.

### EXAMPLE 4

A commercial formulation containing the isopropylamine salt of glyphosate and an ethoxylated tallow amine surfactant as Composition 1 and a glyphosate formulation containing the same glyphosate salt and a propoxylated quaternary ammonium surfactant (as in Example 1) in the same ratio of 2/1 as Composition 2, were compared in a field test with tank-mixed formulations of this invention which contain the above propoxylated quaternary ammonium surfactant from Example 1 and a monolaurate sorbitan fatty acid ester (TWEEN 20) in different ratios, similar to Example 1.

The rates of application of this test were equivalent to 400, 800 and 1200 g.a.e./ha.

Application was made at 250 litre/ha using standard field spraying equipment during October.

| WEEDS ASSESSED: | | |
|---|---|---|
| narrowleaved weeds: | Lolium rigidum | LOLRI |
| | Poa annua | POAAN |
| broadleaved weeds: | Geranium molle | GERMO |
| | Stellaria media | STEME |
| | Brassica | BRSNW |

The weather at the spraying was clear, temperature was around 15°C and no rain was recorded in the six hours following spraying.

Assessment was carried out as in Example 1. Randomised block design with 3 replicates was used (1 check per 5-6 treatment plots). Unit plot size = 1.5m x 3.5m.

The results are presented as average of three replicates at 30 days after treatment, on treated broadleaved (BLW) and narrow-leaved (NLW) species.

**TABLE 4**

| Composition | kg a.e./ha | NLW | BLW |
|---|---|---|---|
| 1 | 0.4 | 67 | 48 |
| | 0.8 | 78 | - |
| | 1.2 | 87 | 84 |
| 2 | 0.4 | 64 | 47 |
| | 0.8 | 74 | 64 |
| | 1.2 | 80 | 84 |
| 3 | 0.4 | 68 | 52 |
| | 0.8 | 78 | 65 |
| | 1.2 | 82 | 81 |
| 4 | 0.4 | 71 | 58 |
| | 0.8 | 79 | 74 |
| | 1.2 | 85 | 83 |
| 5 | 0.4 | 73 | 57 |
| | 0.8 | 81 | 77 |
| | 1.2 | 86 | 81 |
| kg a.e./ha means kilograms glyphosate acid equivalent per hectare. | | | |

As appears from the above table, the herbicidal activity of composition 2 is essentially on about the same level as the commercial formulation 1; formulation 3 according to the invention shows about the same activity level and formulations 4, and 5 show better activity, at least at low rates.

### EXAMPLE 5

Plants were grown from seed in 10 cm pots containing a natural sandy loam soil. The pots were placed in a growth-room until the spraying with a precise relative humidity as well as temperature control. After spraying plants were transferred in a greenhouse where light and temperature were also well controlled. Plants remained in this greenhouse for the remainder of the experiment. Both in the growth-room and in the greenhouse, the water was supplied from below the pots by an automatic irrigation system.

Plants reached the appropriate growth stage for spraying around 3-4 weeks after sowing. Before spraying, pots were selected for uniformity as far as possible and atypical pots discarded. A composition according to the invention containing the isopropylamine salt of glyphosate, an alkyl polyglycoside (Atplus 450 from ICI) and a sorbitan monolaurate (TWEEN 20) in the weight ratio of 2/0.75/0.25 by weight of alkyl polyglycoside to sorbitan monolaurate was diluted with water and sprayed with a Mardrive sprayer at rates shown below in a single pass on oilseed rape (BRSNW), Agropyron repens (AGRRE), lolium (LOLRI) and Geranium molle (GERMO). All replicate pots (3 pots per treatment) were sprayed with one pass of the sprayer.

Pots were distributed randomly in the growth-room after treatment. Untreated control pots were placed at random among treated pots.

Assessment of per cent phytotoxicity was made by comparison with untreated control pots on an arbitrary scale from 0 to 100%, where 0 means no visible effect and 100 means death of all plants.

Formulations according to the present invention are compared with liquid compositions containing no sorbitan ester but only alkyl polyglycoside surfactant Atplus 450.

In the following table GLYPHOSATE IPA means the isopropylamine salt of glyphosate.

The results are represented as average values of 3 rates (200, 400 and 600 g a.e./ha) X 3 replicates at three assessments (14 days, 22 days and 35 days after treatment.

**TABLE 5**

| Composition | Broadleaves BRSNW & GERMO | Narrowleaves AGRRE & LOLRI |
|---|---|---|
| GLYPHOSATE IPA ATPLUS 450 (2/1) | 43 | 59 |
| GLYPHOSATE IPA ATPLUS 450 TWEEN 20 (2/0.75/0.25) | 60 | 60 |

Whilst on narrowleaved species the activity is not substantially enhanced by the formulation according to the invention, the effect on broadleaved weeds, where the glyphosate activity is generally lower than on narrowleaved weeds, the composition of the invention shows remarkably good results. It is to be noticed that the global surfactant content is the same in both compositions.

### EXAMPLE 6 (Rainfastness)

Oilseed rape (BRSNN), Geranium molle (GERMO), Lolium rigidum (LOLRI) and Agropyron repens (AGRRE) were planted in pots containing a 70:30 mixture of sandy loam soil and sand. This soil was previously sterilized. Broadleaves and grasses reached the appropriate growth stage respectively after 4 and 6 weeks. Grasses were cut two times. Before spraying, pots were selected for uniformity as far as possible and atypical pots were discarded. All formulations were applied with the Mardrive precision laboratory sprayer, calibrated to 200 litres/ha, 30 psi (207 Pa). Three replicates of each treatment were sprayed.

The intention of this test is to evaluate the resistance of the sprayed compositions to the "washing effect" of rainfall. Therefore treated plants were subjected at about 1 hour after treatment and, different pots, 3 hours after treatment, and, still different pots, 6 hours after treatment to 12 minutes of simulated rainfall or the equivalent of 5 mm (51) rain, using an "overhead rain simulator system". Those pots are compared with treated pots that have not been submitted to rainfall.

All plants were then placed in a greenhouse at 18°C and sub-irrigated to maintain adequate soil moisture for the duration of the test.

Visual assessments were made at 12, 20 and 43 days after treatment (DAT).

The composition 4 is similar to composition 4 as previously defined but is a formulated liquid concentrate diluted in the spray tank.

Table 6 shows that the composition 4 of the invention has a very good activity level, comparable to the commercial formulation Roundup^{R} even higher. After rainfall composition 4 still shows a high efficacy level, particularly if rain falls between 1 and 3 hours after treatment.

On narrow leaf species (AGGRE and GERMO), the composition of the invention shows a higher bioefficacy after rainfall than the known commercial glyphosate formulation.

On BRSNN and LOLRI (broad leaves), the composition of the invention shows a similar level of efficacy compared to the known commercial formulation 1.

**TABLE 6**

| COMP. | BRSNN 12DAT | BRSNN 20DAT | BRSNN 32DAT | AGRRE 12DAT | AGRRE 20DAT | AGRRE 43DAT | GERMO 12DAT | GERMO 20DAT | LOLRI 43DAT |
|---|---|---|---|---|---|---|---|---|---|
| COMP. 1 | | | | | | | | | |
| 720NoR. | 50.0 | 63.3 | 51.7 | 35.0 | 55.0 | 71.7 | 55.0 | 75.0 | 68.3 |
| 720 1Hr | 11.7 | 15.0 | 26.7 | 0.0 | 10.0 | 11.7 | 21.7 | 26.7 | 20.0 |
| 720 3Hr | 18.3 | 20.0 | 30.0 | 8.3 | 31.7 | 16.7 | 30.0 | 46.7 | 40.0 |
| 720 6Hr | 28.3 | 20.0 | 40.0 | 16.7 | 23.3 | 30.0 | 40.0 | 55.0 | 45.0 |
| 1440 NoR. | 63.3 | 83.3 | 91.7 | 46.7 | 68.3 | 75.0 | 76.7 | 90.0 | 70.0 |
| 1440 1Hr | 28.3 | 25.0 | 33.3 | 6.7 | 20.0 | 28.3 | 51.7 | 55.0 | 45.0 |
| 1440 3Hr | 40.0 | 38.3 | 43.3 | 25.0 | 33.3 | 35.0 | 60.0 | 85.0 | 50.0 |
| 1440 6Hr | 55.0 | 45.0 | 61.7 | 36.7 | 55.0 | 50.0 | 53.3 | 73.3 | 55.0 |

| COMP. 4 | | | | | | | | | |
|---|---|---|---|---|---|---|---|---|---|
| 720 NoR. | 50.0 | 60.0 | 60.0 | 35.0 | 51.7 | 70.0 | 63.3 | 80.0 | 65.0 |
| 720 1Hr | 13.3 | 15.0 | 28.3 | 3.3 | 8.31 | 15.0 | 20.0 | 76.7 | 15.0 |
| 720 3Hr | 33.3 | 31.7 | 36.7 | 46.7 | 58.3 | 48.3 | 41.7 | 55.0 | 43.3 |
| 720 6Hr | 36.7 | 28.3 | 46.7 | 20.0 | 35.0 | 38.3 | 53.3 | 66.7 | 45.0 |
| 1440 NoR. | 66.7 | 87.7 | 75.0 | 60.0 | 80.0 | 83.3 | 78.3 | 93.3 | 76.7 |
| 1440 1Hr | 30.0 | 28.3 | 40.0 | 13.3 | 20.0 | 31.7 | 33.3 | 30.0 | 40.0 |
| 1440 3Hr | 45.0 | 45.0 | 43.3 | 55.0 | 78.3 | 73.3 | 60.0 | 46.7 | 55.0 |
| 1440 6Hr | 48.3 | 52.5 | 56.7 | 55.0 | 68.3 | 68.3 | 68.3 | 86.7 | 55.0 |
| COMP. = Composition | | | | | | | | | |

### EXAMPLE 7

This field test has been carried out, according to the general procedure of Example 4, in order to establish the rainfastness of composition 4 of the invention, compared to control 2 and the commercial formulation 1. The composition 4 is in this case a formulated liquid concentrate diluted in the spray tank.

Spraying was carried out in spring-summer season:

Temperature at spraying was about 24°C.

No natural rainfall was recorded within 6 hours after treatment.

Rain was however applied at a rate of 8 l (8mm) in approximately 2 minutes, at 1 hour, 3 hours, and 6 hours after treatment.
- Weeds tested :: TRZAX : Triticum sativum
LOLRI : Lolium rigidum
MATCH : Matricaria recutita
BRSNW : Brassica napus (oilseed rape)

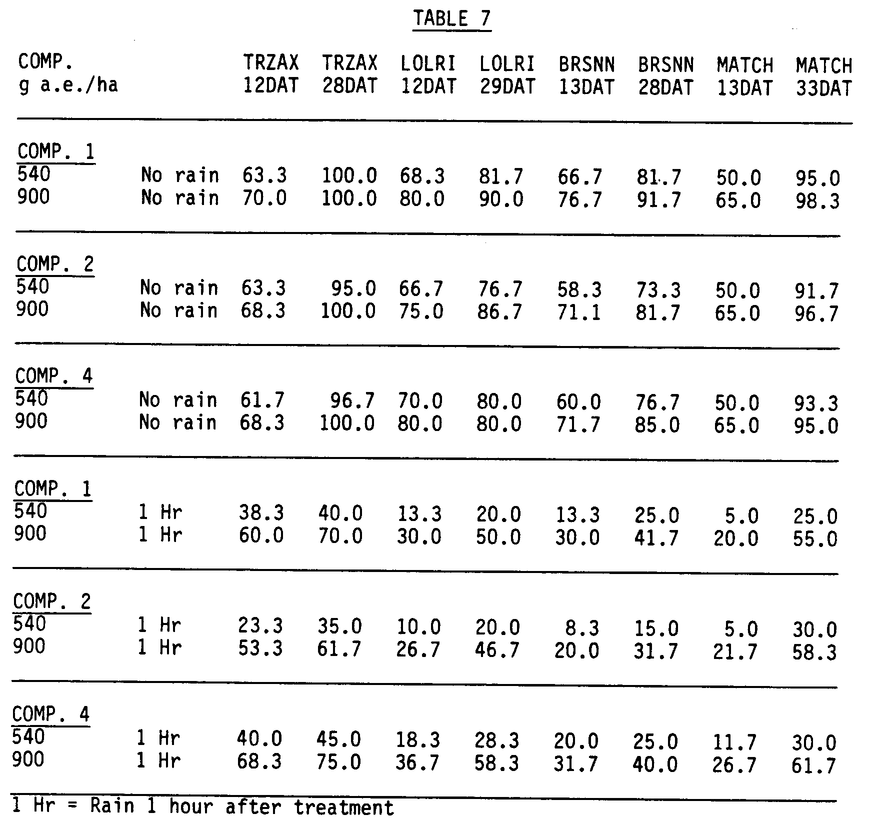

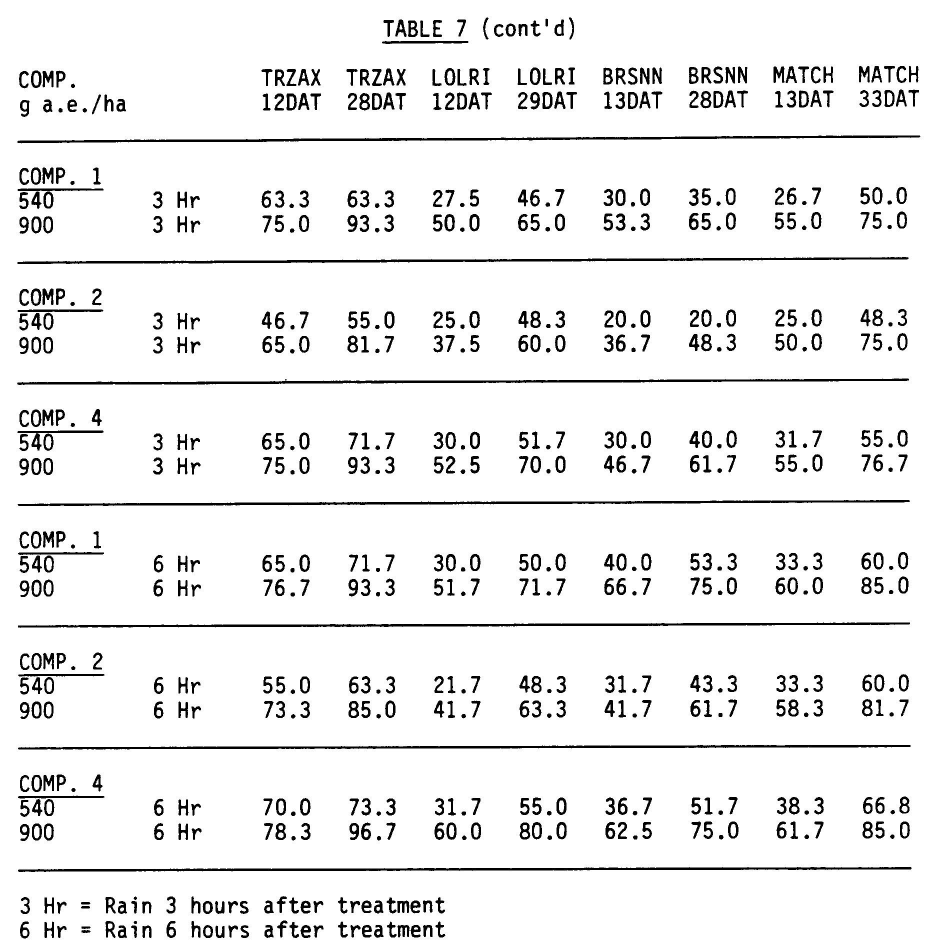

From the above it appears that composition 4 according to the invention shows a better rainfastness (retained activity) than control 2 and, in some cases, even better than the commercial formulation 1.

### EXAMPLE 8

Whilst the previous examples refer to liquid compositions, the present example is related to solid formulations.

| Composition 7 : Water soluble granule (SG) | |
|---|---|
| - 3/1 mixture of NH₄/Na salt of glyphosate | 57.5% by weight (52% acid equivalent) |
| - propoxylated quaternary ammonium surfactant as previously defined | 9.6% |
| - Tween 20 | 9.6% |
| - Ammonium sulfate | 23.0% |
| - Water | 0.3% |

| Composition 8 : (SG) | |
|---|---|
| - 3/1 NH₄/Na salt of glyphosate | 73.9% by weight (66% acid equivalent) |
| - Emcol CC-55 (propoxylated quaternary ammonium ex WITCO) | 12.3% |
| - Tween 20 | 12.3% |
| - Water | 1.5% |

| Composition 9 : (SG) | |
|---|---|
| - 3/1 NH₄/Na salt of glyphosate | 74.6% w/w (67.3% acid equivalent) |
| - Pluronic L 44 (tradename-BASF) | 12.4% |
| - Tween 20 | 12.4% |
| - Water | 0.6% |

| Composition 10 : (SG) | |
|---|---|
| - 3/1 NH₄/Na salt of glyphosate | 74.6% w/w (67.3% acid equivalent) |
| - Pluronic L 64 (tradename-BASF) | 12.4% |
| - Tween 20 | 12.4% |
| - Water | 0.6% |

| Composition 11 : (SG) | |
|---|---|
| - 3/1 NH₄/Na salt of glyphosate | 74.6% w/w (67.3% acid equivalent) |
| - Pluronic P 84 (tradename-BASF) | 12.4% |
| - Tween 20 | 12.4% |
| - Water | 0.6% |

| Composition 12 : (SG) | |
|---|---|
| - 3/1 NH₄/Na salt of glyphosate | 76.5% w/w (69% a.e.) |
| - propoxylated quaternary ammonium surfactant as defined in Example 1 | 16.3% w/w |
| - Tween 20 | 4.1% w/w |
| - PEG 6000 (tradename) | 2.6% w/w |
| - Water | 0.5% w/w |

| Composition 13 : (SG) | |
|---|---|
| - 3/1 NH₄/Na salt of glyphosate | 78.0% w/w (70.4% a.e.) |
| - propoxylated quaternary ammonium surfactant as defined in Example 1 | 17.4% w/w |
| - Tween 20 | 4.0% w/w |
| - Water | 1.0% w/w |

| Composition 14 : (SG) | |
|---|---|
| - 3/1 NH₄/Na salt of glyphosate | 57.6% w/w (52% a.e.) |
| - Ethoquad C-25 (tradename) | 10.0% |
| - Tween 80 | 10.0% |
| - Ammonium sulfate | 22.0% |
| - Water | 0.4% |

| Composition 15 : (SG) | |
|---|---|
| - 3/1 NH₄/Na salt of glyphosate | 74.6% w/w (67.35% a.e.) |
| - Emcol CC-55 (tradename-Witco) | 12.4% |
| - Tween 80 | 12.4% |
| - Water | 0.6% |

| Composition 16 : (SG) | |
|---|---|
| - 3/1 NH₄/Na salt | 74.5% w/w (67.25% a.e.) |
| - Emcol CC-55 (tradename-Witco) | 8.3% |
| - Tween 20 | 8.3% |
| - Tween 80 | 8.3% |
| - Water | 0.5% |

| Composition 17 : (SG) | |
|---|---|
| - 3/1 NH₄/Na salt | 74.6% w/w (67.35% a.e.) |
| - Pluronic L 44 (tradename-BASF) | 12.4% |
| - Tween 80 | 12.4% |
| - Water | 0.5% |

| Composition 18 : (SG) | |
|---|---|
| - sodium salt of glyphosate | 47.8% (42.3% a.e.) |
| - propoxylated quaternary ammonium surfactant as previously defined (Example 1) | 12.0% |
| - Tween 20 | 4.7% |
| - Ammonium sulfate | 33.4% |
| - inerts | 1.6% |
| - Water | 0.5% |

Tween 20 is a tradename (ICI) for an ethoxylated sorbitan monolaurate ester.

Tween 80 is also an ICI tradename for a similar surfactant having a longer alkyl chain with the same level of ethoxylation as Tween 20.

Compositions 7-17 may be prepared according to the following steps:
- Mixing the respective glyphosate salt, and optionally ammonium sulfate, in a mixer
- Adding both surface active agents
- Optionally adding water and homogenising
- Extrusion of the obtained cold dough
- Drying, e.g. fluid bed drying
- Sieving and packaging.

The surface active agents may be added in liquid form or powder form or similar. In case the surfactant is in a waxy state, it is preferable to add the surfactant in molten state.

There are obtained water soluble granules of uniform shape. The granules are free-flowing, dustless, and dissolve in water upon limited agitation.

Composition 18 may be prepared by way of example, according to the following steps:
- Glyphosate acid wet cake is neutralized in situ by NaOH in a mixer, e.g. a Hobart mixer, in the presence of the surfactants and ammonium sulfate.
- The mixture (hot dough) is homogenized and extruded (e.g.) radial extrusion) in order to produce granules.
- The extrudates are dried, e.g. in a fluid bed or on a band dryer, sieved and packed. Water soluble granules of uniform shape are obtained. The granules are free flowing, dustless, and dissolve in water upon mild agitation.

### EXAMPLE 9

The solid composition 18 has been evaluated on BRSNN in a greenhouse/growth room test carried out according to the protocol as described in Example 1. The spray solution was obtained by dissolution of the soluble granules in water in a corresponding amount in order to obtain the indicated rate of kg acid equivalents per hectare.

The control of this example is a solid formulation having the same global surfactant content, the same glyphosate equivalents loading and the same ammonium sulfate content, but the surfactant component consisting only in the same propoxylated quaternary ammonium surfactant as used in the tested composition 18.

Control 1 (commercial liquid glyphosate composition) is used for comparison as well.

**TABLE 9**

| Composition | Rate g a.e./ha | BRSNW 12DAT | 21DAT | 34DAT |
|---|---|---|---|---|
| Control | 300 | 20.0 | 26.0 | 31.7 |
| | 600 | 43.3 | 56.7 | 55.0 |
| | 900 | 65.0 | 75.0 | 76.7 |
| Comp. 18 | 300 | 26.7 | 38.3 | 53.3 |
| | 600 | 41.7 | 51.7 | 68.3 |
| | 900 | 61.7 | 78.3 | 85.0 |
| Comp. 1 | 300 | 46.7 | 51.7 | 61.7 |
| | 600 | 58.3 | 68.3 | 81.7 |
| | 900 | 76.7 | 85.0 | 95.0 |

### EXAMPLE 10

Additional liquid concentrated formulations have been prepared:

| Composition 19 : | |
|---|---|
| - Isopropylamine salt of glyphosate | 67.00% w/w |
| - Emcol CC-55 (propoxylated quaternary ammonium) | 12.40% w/w |
| - Tween 20 | 3.10% w/w |
| - Water | 17.50% w/w |

| Composition 20 : | |
|---|---|
| - Isopropylamine salt of glyphosate | 67.00% w/w |
| - Ethoquad C-25 | 12.40% |
| - Tween 20 | 3.10% |
| - Water | 17.50% |

Said formulations are diluted in an appropriate water volume and evaluated on different weed species in a growthroom/greenhouse test carried out according to the protocol of example 1.

**TABLE 10**

| COMPOSITION | Rate g a.e./ha | BRSNN 7DAT | BRSNN 18DAT | BRSNN 32DAT | ELYRE 18DAT | ELYRE 32DAT | LOLRI 32DAT | GERMO 32DAT |
|---|---|---|---|---|---|---|---|---|
| Comp. 19 | 300 | 20.0 | 35.0 | 23.3 | 8.3 | 8.3 | 10.0 | 60.0 |
| | 600 | 45.0 | 61.7 | 40.0 | 23.3 | 35.0 | 61.7 | 95.0 |
| | 900 | 56.7 | 80.0 | 68.3 | 56.7 | 63.3 | 68.3 | 96.7 |
| Comp. 20 | 300 | 30.0 | 35.0 | 36.7 | 20.0 | 15.0 | 6.7 | 71.7 |
| | 600 | 41.7 | 53.3 | 50.0 | 60.0 | 62.5 | 35.0 | 95.0 |
| | 900 | 51.7 | 75.0 | 68.3 | 71.7 | 71.7 | 60.0 | 98.3 |
| Control 1 | 300 | 30.0 | 41.7 | 43.3 | 20.0 | 30.0 | 23.3 | 70.0 |
| | 600 | 43.3 | 68.3 | 60.0 | 50.0 | 50.0 | 56.7 | 98.3 |
| | 900 | 55.0 | 73.3 | 73.3 | 70.0 | 87.5 | 63.3 | 96.7 |

## Claims

1. A composition of glyphosate comprising a glyphosate herbicide and a surface active component which is the combination of a sorbitan fatty acid ester and a surfactant chemically different from said sorbitan ester, selected from the group consisting of
- amines, such as ethoxylated alkyl amine, particularly tallow amines, cocoamines, amine oxides;
- quaternary ammonium salts, such as ethoxylated and/or propoxylated quaternary ammonium salts,
- alkylpolyglycoside or alkylglycoside, glucose and sucrose fatty acid esters;
wherein, for the surface active component the ratio by weight of sorbitan ester to surfactant is comprised between 10/90 and 30/70, for a liquid composition, and between 10/90 and 90/10, preferably 10/90 and 50/50, for a solid composition.

2. A composition according to claim 1 characterized in that the sorbitan ester is selected from the group consisting of sorbitan monolaurate, sorbitan monoolate, sorbitan trioleate, sorbitan sesquioleate, sorbitan monopalmitate, sorbitan monostearate, sorbitan tristearate, possibly ethoxylated and/or propoxylated.

3. A composition according to Claim 2 characterized in that the surfactant chemically different from said sorbitan ester is selected from the group consisting of
- quaternary ammonium surfactants, such as ethoxylated and/or propoxylated quaternary ammonium surfactants;

4. A composition according to any of Claims 1-3 characterised in that the weight ratio of glyphosate (expressed as glyphosate acid equivalent) to the total surface active component present is between 1:5 and 5:1.

5. A composition according to any of Claims 1 to 4 in which the glyphosate is present as the isopropylamine salt.

6. A composition according to any of Claims 1 to 4 in which the glyphosate is present as the trimethylsulfonium salt.

7. A composition according to any of Claims 1 to 5 which is a liquid concentrate containing at least 100 g/l of glyphosate expressed as glyphosate acid equivalent.

8. A composition according to any of Claims 1 to 4 in which the glyphosate is present as an alkali metal, alkali-earth metal or ammonium salt or as a mixture of said salts.

9. A composition according to Claim 7 in which the glyphosate is present as a sodium salt and/or ammonium salt.

10. A composition according to either of Claim 8 and 9 which is a solid composition.

11. A composition according to Claim 10 which includes a water-soluble support.

12. A composition according to any of Claims 1 to 5 which is a spray solution having a concentration such that when sprayed at 200-600 1/ha, 0.125 to 3 kg of glyphosate (expressed as glyphosate acid equivalents) per hectare is applied.

13. A method of controlling unwanted plants which comprises applying a composition according to any of Claims 1-12 at a rate of from 0.125 to 3 kg glyphosate acid equivalent per hectare.

14. An adjuvant for agricultural composition characterized in that it comprises a sorbitan fatty acid ester, preferably alkoxylated sorbitan fatty acid ester, and a surfactant chemically different from said sorbitan ester selected from
- amines, such as ethoxylated alkylamine, particularly follow amines, cocoamines, amine oxides;
- quaternary ammonium salts, such as ethoxylated and/or propoxylated quaternary ammonium salts;
- alkylpolyglycoside or alkylglycoside, glucose and sucrose fatty acid esters, in a ratio by weight of sorbitan ester to surfactant comprised between 10/90 and 30/70.

## Patentansprüche

1. Glyphosat-Zusammensetzung, welche ein Glyphosat-Herbizid und eine grenzflächenaktive Komponente umfaßt, die die Kombination eines Sorbitanfettsäureesters und eines chemisch vom Sorbitanester verschiedenen Surfactants ist, ausgewählt aus der Gruppe bestehend aus:
- Aminen, wie ethoxyliertem Alkylamin, insbesondere Talgaminen, Cocoaminen, Aminoxiden;
- quaternären Ammoniumsalzen, wie ethoxylierten und/oder propoxylierten quaternären Ammoniumsalzen;
- Alkylpolyglykosid oder Alkylglykosid, Glucose- und Saccharosefettsäureestern;
wobei für die grenzflächenaktive Komponente das Masseverhältnis von Sorbitanester zu Surfactant zwischen 10/90 und 30/70 für eine flüssige Zusammensetzung und zwischen 10/90 und 90/10, vorzugsweise 10/90 und 50/50, für eine feste Zusammensetzung liegt.

2. Zusammensetzung nach Anspruch 1, dadurch gekennzeichnet, daß der Sorbitanester ausgewählt ist aus der Gruppe bestehend aus Sorbitanmonolaurat, Sorbitanmonoolat, Sorbitantrioleat, Sorbitansesquioleat, Sorbitanmonopalmitat, Sorbitanmonostearat, Sorbitantristearat, möglicherweise ethoxyliert und/oder propoxyliert.

3. Zusammensetzung nach Anspruch 2, dadurch gekennzeichnet, daß das chemisch vom Sorbitanester verschiedene Surfactant ausgewählt ist aus der Gruppe bestehend aus:
- quaternären Ammonium-Surfactants, wie ethoxylierten und/oder propoxylierten quaternären Ammonium-Surfactants.

4. Zusammensetzung nach einem der Ansprüche 1 bis 3, dadurch gekennzeichnet, daß das Masseverhältnis von Glyphosat (ausgedrückt als Glyphosatsäure-Äquivalent) zur gesamten vorliegenden grenzflächenaktiven Komponente zwischen 1:5 und 5:1 beträgt.

5. Zusammensetzung nach einem der Ansprüche 1 bis 4, worin das Glyphosat als Isopropylaminsalz vorliegt.

6. Zusammensetzung nach einem der Ansprüche 1 bis 4, worin das Glyphosat als Trimethylsulfoniumsalz vorliegt.

7. Zusammensetzung nach einem der Ansprüche 1 bis 5, welche ein flüssiges Konzentrat ist, das zumindest 100 g/l Glyphosat, ausgedrückt als Glyphosatsäure-Äquivalent, enthält.

8. Zusammensetzung nach einem der Ansprüche 1 bis 4, worin das Glyphosat als Alkalimetall-, Erdalkalimetall- oder Ammoniumsalz oder als Mischung dieser Salze vorliegt.

9. Zusammensetzung nach Anspruch 7, worin das Glyphosat als Natriumsalz und/oder Ammoniumsalz vorliegt.

10. Zusammensetzung nach Anspruch 8 oder 9, welche eine feste Zusammensetzung ist.

11. Zusammensetzung nach Anspruch 10, welche einen wasserlöslichen Träger enthält.

12. Zusammensetzung nach einem der Ansprüche 1 bis 5, welche eine Sprühlösung mit einer derartigen Konzentration ist, daß beim Aufsprühen von 200 bis 600 l/ha 0,125 bis 3 kg Glyphosat (ausgedrückt als Glyphosatsäure-Äquivalente) pro Hektar aufgebracht werden.

13. Verfahren zur Bekämpfung unerwünschter Pflanzen, welches das Aufbringen einer Zusammensetzung nach einem der Ansprüche 1 bis 12 bei einer Rate von 0,125 bis 3 kg Glyphosatsäure-Äquivalent pro Hektar umfaßt.

14. Adjuvans für eine landwirtschaftliche Zusammensetzung, dadurch gekennzeichnet, daß es einen Sorbitanfettsäureester, vorzugsweise alkoxylierten Sorbitanfettsäureester, und ein chemisch vom Sorbitanester verschiedenes Surfactant umfaßt, ausgewählt aus:
- Aminen, wie ethoxyliertem Alkylamin, insbesondere Talgaminen, Cocoaminen, Aminoxiden;
- quaternären Ammoniumsalzen, wie ethoxylierten und/oder propoxylierten quaternären Ammoniumsalzen;
- Alkylpolyglykosid oder Alkylglykosid, Glucose- und Saccharosefettsäureestern;
in einem Masseverhältnis von Sorbitanester zu Surfactant zwischen 10/90 und 30/70.

## Revendications

1. Composition de glyphosate comprenant un herbicide de glyphosate et un constituant tensioactif qui est la combinaison d'un ester d'acide gras de sorbitan et d'un tensioactif chimiquement différent dudit ester de sorbitan, choisi dans le groupe constitué par
- des amines, telles que une alkylamine éthoxylée, en particulier les amines de suif, les amines de coco, les oxydes d'amine;
- des sels d'ammonium quaternaire, tels que les sels d'ammonium quaternaire éthoxylés et/ou propoxylés,
- un alkylpolyglycoside ou un alkylglycoside, des esters d'acide gras de glucose et de saccharose;
dans laquelle pour le constituant tensioactif le rapport en poids entre l'ester de sorbitan et le tensioactif est compris entre 10/90 et 30/70, pour une composition liquide, et entre 10/90 et 90/10, de préférence 10/90 et 50/50, pour une composition solide.

2. Composition selon la revendication 1, caractérisée en ce que l'ester de sorbitan est choisi dans le groupe constitué par le monolaurate de sorbitan, le monoolate de sorbitan, le trioléate de sorbitan, le sesquioléate de sorbitan, le monopalmitate de sorbitan, le monostéarate de sorbitan, le tristéarate de sorbitan, éventuellement éthoxylés et/ou propoxylés.

3. Composition selon la revendication 2, caractérisée en ce que le tensioactif différent dudit ester de sorbitan est choisi dans le groupe constitué par des tensioactifs d'ammonium quaternaire, tels que les tensioactifs d'ammonium quaternaire éthoxylés et/ou propoxylés.

4. Composition selon l'une quelconque des revendications 1-3, caractérisée en ce que le rapport en poids entre le glyphosate (exprimé en équivalent en acide de glyphosate) et le constituant tensioactif total présent se situe entre 1:5 et 5:1.

5. Composition selon l'une quelconque des revendications 1 à 4, dans laquelle le glyphosate est présent sous la forme du sel d'isopropylamine.

6. Composition selon l'une quelconque des revendications 1 à 4, dans laquelle le glyphosate est présent sous la forme du sel de triméthylsulfonium.

7. Composition selon l'une quelconque des revendications 1 à 5, qui est un concentré liquide contenant au moins 100 g/l de glyphosate exprimé en équivalent en acide de glyphosate.

8. Composition selon l'une quelconque des revendications 1 à 4, dans laquelle le glyphosate est présent sous la forme d'un sel de métal d'alcalin, de métal alcalino-terreux ou d'ammonium ou sous la forme d'un mélange desdits sels.

9. Composition selon la revendication 7, dans laquelle le glyphosate est présent sous la forme d'un sel de sodium et/ou d'un sel d'ammonium.

10. Composition selon l'une quelconque des revendications 8 et 9, qui est une composition solide.

11. Composition selon la revendication 10, qui comprend un support soluble dans l'eau.

12. Composition selon l'une quelconque des revendications 1 à 5, qui est une solution à pulvériser ayant une concentration telle que lorsqu'elle est pulvérisée à 200-600 l/ha, 0,125 à 3 kg de glyphosate (exprimés en équivalents en acide de glyphosate) par hectare sont appliqués.

13. Procédé de lutte contre les plantes indésirables qui comprend le fait d'appliquer une composition selon l'une quelconque des revendications 1 à 12 à un taux de 0,125 à 3 kg en équivalent en acide de glyphosate par hectare.

14. Adjuvant pour une composition agricole, caractérisé en ce qu'il comprend un ester d'acide gras de sorbitan, de préférence un ester d'acide gras de sorbitan alcoxylé, et un tensioactif chimiquement différent dudit ester de sorbitan choisi parmi
- des amines, telles qu'une alkylamine éthoxylée, en particulier les amines de suif, les amines de coco, les oxydes d'amine;
- des sels d'ammonium quaternaire, tels que les sels d'ammonium quaternaire éthoxylés et/ou propoxylés;
- un alkylpolyglycoside ou un alkylglycoside, des esters d'acide gras de glucose et de saccharose,
dans un rapport en poids entre l'ester de sorbitan et le tensioactif compris entre 10/90 et 30/70.
